# EUROPÄISCHE PATENTANMELDUNG

(11) **EP 4 794 164 A1**
(43) Veröffentlichungstag der Anmeldung: **19.08.2026**
(21) Anmeldenummer: 25158483.5
(22) Anmeldetag: 18.02.2025
(51) Int. Cl.: H02J 7/00, H01M 10/46

(54) **LADEVORRICHTUNG**

(71) Anmelder: Hilti Aktiengesellschaft, 9494 Schaan (LI)
(72) Erfinder: Herrmann, Johannes, 76137 Karlsruhe (DE); Karaduman, Aydin, 76131 Karlsruhe (DE); Lübben, Felix, 76133 Karlsruhe (DE); Metzger, Lukas, 76676 Graben-Neudorf (DE); Scholl, Jonathan, 76137 Karlsruhe (DE); Kolbe, Andreas, 86899 Landsberg am Lech (DE)
(74) Vertreter: Hilti Aktiengesellschaft Corporate Intellectual Property

(57) **Zusammenfassung**

System zum Versorgen von Akkumulatoren, insbesondere als Energiespeicher einer Werkzeugmaschine, mit elektrischer Energie.

Erfindungsgemäß enthält das System wenigstens eine Regel- und Steuereinheit mit wenigstens einer Eingangsschnittstelle zur Aufnahme elektrischer Energie, wenigstens einer Ausgabeschnittstelle zur Abgabe elektrischer Energie, wenigstens einen Gleichrichter, wenigstens eine erste mit der Regel- und Steuereinheit wenigstens elektrisch verbindbaren Anschlusseinrichtung zum Versorgen wenigstens eines ersten und zweiten Akkumulators mit elektrischer Energie sowie eine zweite mit der Regel- und Steuereinheit wenigstens elektrisch verbindbaren Anschlusseinrichtung zum Versorgen wenigstens einer Aufbewahrungseinheit mit elektrischer Energie, wobei jede Aufbewahrungseinheit wenigstens eine Akku-Schnittstelle zum Versorgen wenigstens eines Akkumulators mit elektrischer Energie enthält.

Verfahren zum Steuern und Regeln des Systems zum Versorgen von Akkumulatoren mit elektrischer Energie.

## Beschreibung

Die vorliegende Erfindung betrifft ein System zum Versorgen von Akkumulatoren, insbesondere als Energiespeicher einer Werkzeugmaschine, mit elektrischer Energie.

Des Weiteren betrifft die vorliegende Erfindung ein Verfahren zum Steuern und Regeln eines Systems zum Versorgen wenigstens einer Anzahl an Akkumulatoren, insbesondere als Energiespeicher einer Werkzeugmaschine.

Auf dem Markt erhältliche Akku-Ladeeinrichtungen, insbesondere Ladevorrichtungen zum Versorgen von Werkzeugmaschinen-Akkumulatoren mit elektrischer Energie, gemäß dem Stand der Technik verfügen für gewöhnlich nur über eine fixe bzw. unveränderbare Anzahl an Akku-Schnittstellen zum Aufnehmen und Laden von Akkumulatoren.

Es ist damit Aufgabe der vorliegenden Erfindung das vorstehend beschriebene Problem zu lösen.

Die Aufgabe wird gelöst durch den Gegenstand des unabhängigen Patentanspruchs 1 und 12. Weitere vorteilhafte Ausführungsformen des erfindungsgemäßen Gegenstands sind in den entsprechenden abhängigen Patentansprüchen enthalten.

Die Aufgabe wird dabei insbesondere gelöst durch ein System zum Versorgen von Akkumulatoren, insbesondere als Energiespeicher einer Werkzeugmaschine, mit elektrischer Energie.

Erfindungsgemäß enthält das System wenigstens eine Regel- und Steuereinheit mit wenigstens einer Eingangsschnittstelle zur Aufnahme elektrischer Energie, mit wenigstens einer Ausgabeschnittstelle zur Abgabe elektrischer Energie, mit wenigstens einen Gleichrichter, wenigstens eine mit der Regel- und Steuereinheit wenigstens elektrisch verbindbaren Versorgungseinrichtung zum Versorgen wenigstens eines ersten und zweiten Akkumulators mit elektrischer Energie sowie eine mit der Regel- und Steuereinheit wenigstens elektrisch verbindbaren Anschlusseinrichtung zum Versorgen wenigstens einer Aufbewahrungseinheit mit elektrischer Energie, wobei jede Aufbewahrungseinheit wenigstens eine Akku-Schnittstelle zum Versorgen wenigstens eines Akkumulators mit elektrischer Energie enthält.

Gemäß einer vorteilhaften Ausführungsform kann es möglich sein, dass die wenigstens eine Regel- und Steuereinheit mit Hilfe des wenigstens einen Gleichrichters einen AC-Eingangsspannungswert auf eine DC-Ausgangsspannung mit einem Wert von 12 bis 60 Volt, und insbesondere 48 Volt umwandelt.

Bei dem AC-Eingangsspannungswert kann es beispielsweise sich um 120, 220 oder 400 Volt handeln.

Entsprechend einer weiteren vorteilhaften Ausführungsform kann es möglich sein, dass die Versorgungseinrichtung und die Anschlusseinrichtung jeweils wenigstens einen Gleichspannungswandler enthält, sodass eine Ausgangsspannung mit einem Wert von 12 bis 30 Volt, und insbesondere 22 Volt, oder Ausgabeleistung mit einem Wert von 100 bis 200 Watt, und insbesondere 150 Watt, zum Laden wenigstens eines Akkumulators verfügbar ist.

Gemäß einer weiteren vorteilhaften Ausführungsform kann es möglich sein, dass die Versorgungseinrichtung und die Anschlusseinrichtung jeweils wenigstens eine Temperaturregeleinrichtung zum wahlweisen Heizen oder Kühlen wenigstens eines Akkumulators enthalten.

Bei der Temperaturregeleinrichtung zum wahlweisen Kühlen kann es sich um einen Lüfter handeln.

Entsprechend einer weiteren vorteilhaften Ausführungsform kann es möglich sein, dass die wenigstens eine Versorgungseinrichtung wenigstens eine verschließbare Kammer zur Aufnahme wenigstens eines Akkumulators enthält.

Gemäß einer weiteren vorteilhaften Ausführungsform kann es möglich sein, dass die Anschlusseinrichtung wenigstens eine in einer Länge variable Leitungseinrichtung enthält, welche zur Übertragung elektrischer Energie mit der wenigstens einen Aufbewahrungseinheit wiederlösbar verbindbar ist.

Die Leitungseinrichtung kann als Kabeltrommel ausgestaltet sein.

Entsprechend einer weiteren vorteilhaften Ausführungsform kann es möglich sein, dass die wenigstens eine Aufbewahrungseinheit als Koffer ausgestaltet ist. Die beispielsweise als Koffer ausgestaltete Aufbewahrungseinheit weist dabei eine Größe bzw. Volumen auf, dass wenigstens eine Werkzeugmaschine und wenigstens ein Akkumulator zur Versorgung der Werkzeugmaschine mit elektrischer Energie in der Aufbewahrungseinheit aufbewahrt werden kann.

Gemäß einer weiteren vorteilhaften Ausführungsform kann es möglich sein, dass die Versorgungseinrichtung wenigstens eine erste und zweite Moduleinheit enthält, wobei jede Moduleinheit zur Aufnahme wenigstens eines Akkumulators ausgestaltet ist und wobei jede Moduleinheit wenigstens eine Schnittstelle zum wiederlösbaren Verbinden mit wenigstens einer weiteren Moduleinheit enthält, und wobei durch die Verbindung der Moduleinheiten wenigstens mechanisch, elektrisch sowie zum Datenaustausch miteinander verbunden sind.

Entsprechend einer weiteren vorteilhaften Ausführungsform kann es möglich sein, dass die Regel- und Steuereinheit wenigstens eine Eingabe- und Ausgabeeinrichtung und/oder wenigstens eine Funkschnittstelle enthält.

Die Funkschnittstelle kann auch als Transceiver bezeichnet werden und kann auf einer Bluetooth- oder WiFi-Technologie basieren. Die Eingabe- und Ausgabeeinrichtung kann auch als MMI-Schnittstelle mit wenigstens einem optischen Ausgabeelement ausgestaltet sein. Das optische Ausgabeelement kann dabei als LED-Leuchte ausgestaltet sein.

Gemäß einer weiteren vorteilhaften Ausführungsform kann es möglich sein, dass die Regel- und Steuereinheit wenigstens einen Gleichspannungswandler und wenigstens eine Akku-Ladeschnittstelle enthält.

Der Gleichspannungswandler kann auch als DC/DC-Wandler bezeichnet werden. Bei der Akku-Ladeschnittstelle kann es sich um eine Induktionsladeeinrichtung handeln.

Entsprechend einer weiteren vorteilhaften Ausführungsform kann es möglich sein, dass eine Regel- und Steuereinheit zur Verwendung in einem System zum Versorgen wenigstens einer Anzahl an Akkumulatoren, insbesondere als Energiespeicher einer Werkzeugmaschine, mit elektrischer Energie wenigstens eine Eingangsschnittstelle zur Aufnahme elektrischer Energie, wenigstens eine Ausgabeschnittstelle zur Abgabe elektrischer Energie, wenigstens einen Gleichrichter sowie eine Steuerungseinheit enthält.

Darüber hinaus wird die Aufgabe gelöst durch ein Verfahren zum Steuern und Regeln einer Vorrichtung zum Versorgen wenigstens einer Anzahl an Akkumulatoren, insbesondere als Energiespeicher einer Werkzeugmaschine.

Erfindungsgemäß sind die folgenden Verfahrensschritte enthält
- Bereitstellen eines ersten Leistungswerts an wenigstens einer Versorgungseinrichtung zum Laden wenigstens eines ersten Akkumulators mit einem zweiten Leistungswerts und wenigstens eines zweiten Akkumulators mit einem dritten Leistungswert, wobei der zweite und dritte Leistungswert nahezu identisch sind; oder
- Bereitstellen eines ersten Leistungswerts an wenigstens einer Versorgungseinrichtung zum Laden wenigstens eines ersten Akkumulators mit einem zweiten Leistungswerts und wenigstens eines zweiten Akkumulators mit einem dritten Leistungswert, wobei der zweite und dritte Leistungswert unterschiedlich sind.

Gemäß einer weiteren vorteilhaften Ausführungsform kann der zusätzliche Verfahrensschritt enthalten sein
- Bereitstellen des zweiten und dritten Leistungswerts zum Laden eines ersten Akkumulators.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine Ansicht auf die erfindungsgemäße Vorrichtung in einem ersten Zustand; und
- Figur 2: eine weitere Ansicht auf die erfindungsgemäße Vorrichtung in einem zweiten Zustand.

### Ausführungsbeispiele:

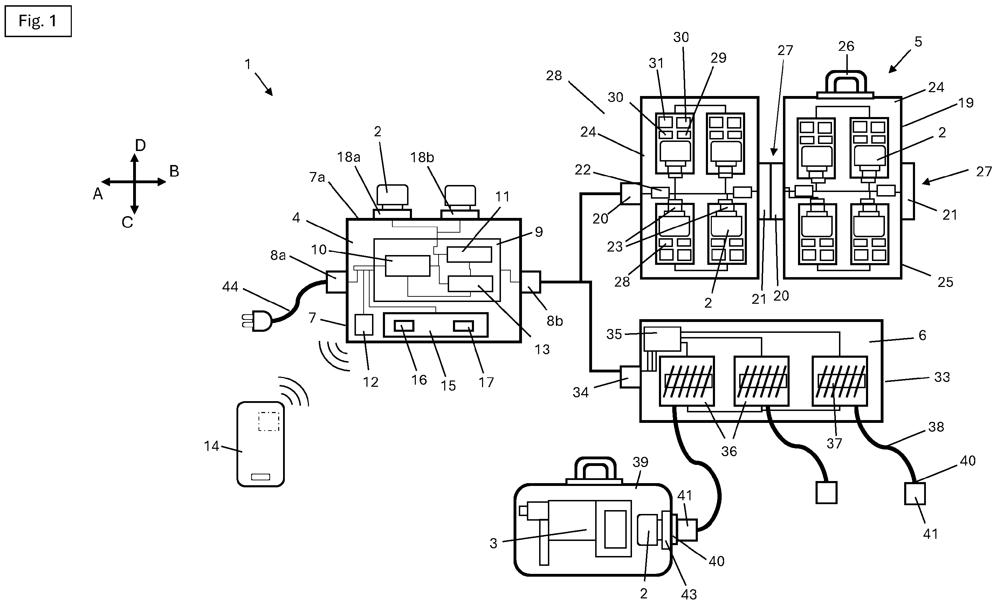

In Figur 1 ist ein System 1 zum Versorgen von Akkumulatoren 2, insbesondere als Energiespeicher einer Werkzeugmaschine 3, mit elektrischer Energie gemäß einer beispielhaften Ausführungsform gezeigt.

Das System 1 enthält dabei im Wesentlichen eine Regel- und Steuereinheit 4, eine Versorgungseinrichtung 5 und eine Anschlusseinrichtung 6.

Die Regel- und Steuereinheit 4 enthält ein Gehäuse 7, ein Eingangsschnittstelle 8a zur Aufnahme elektrischer Energie, eine Ausgabeschnittstelle 8b zur Abgabe elektrischer Energie.

In dem Gehäuse 7 der Regel- und Steuereinheit 4 ist unter anderem eine Steuerungseinheit 9, ein Gleichrichter 10, einen Gleichspannungswandler 11, eine Funkschnittstelle 12 sowie eine Speichereinheit 13 positioniert.

Die Funkschnittstelle 12 ist in dem vorliegenden Ausführungsbeispiel als Bluetooth-Modul ausgestaltet, um drahtlos Daten und Informationen zu senden und empfangen.

Alternativ oder zusätzlich kann die Funkschnittstelle 12 auch als eigenständiges GSM/LTE/(2/2.5/3G/4G/5G (LTE)-Modul oder WiFi-Modul ausgestaltete sein.

Wie in den Figuren angedeutet dient die Funkschnittstelle 12 zum Daten- und Informationsaustausch mit einem externen Gerät 14, wie beispielsweise ein Smartphone.

Die Eingabeschnittstelle 8 ist gemäß dem in Figur 1 gezeigten Ausführungsbeispiel zum wiederlösbaren Verbinden mit einer Energieversorgung 44 ausgestaltet. Die beispielhafte Energieversorgung 44 ist als Stromkabel zum wiederlösbaren Verbinden der Regel- und Steuereinheit 4 mit einer Netzstromquelle (= Steckdose) ausgestaltet. Gemäß dem vorliegenden Ausführungsbeispiel wird die Regel- und Steuereinheit 4 mit einer Wechselspannung (AC) mit 220V versorgt.

Alternativ kann die Regel- und Steuereinheit 4 auch mit einer Photovoltaik-Anlage, Brennstoffzelle, Generator (z.B. Dieselgenerator und/oder einem Windrad verbunden sein.

Die Ausgabeschnittstelle 8 ist gemäß dem in Figur 1 gezeigten Ausführungsbeispiel zum wiederlösbaren Verbinden mit einer Stromleitung (d.h. Leitung zum Übertragen von elektrischer Energie) ausgestaltet. An der Ausgabeschnittstelle 8 wird eine Gleichspannung mit 48 Volt bereitgestellt. Generell beträgt die Gleichspannung an der Ausgabeschnittstelle 8 weniger als 60 Volt. Gemäß einer alternativen Ausführungsform kann auch mehr als eine einzige Ausgabeschnittstelle 8 an der Regel- und Steuereinheit 4 vorgesehen sein. In dem Fall, dass mehrere Ausgabeschnittstellen 8 an der Regel- und Steuereinheit 4 vorgesehen sind, wird entweder an allen Ausgabeschnittstellen 8 ein nahezu identischer Spannungswert (z.B. 48 V) oder unterschiedliche Spannungswerte (z.B. 12 bis 60 V) bereitgestellt.

An einer Vorderseite des Gehäuses 7 der Regel- und Steuereinheit 4 ist eine Eingabe- und Ausgabeeinrichtung 15 vorgesehen. Die in Figur beispielhaft dargestellte Eingabe- und Ausgabeeinrichtung 15 enthält dabei eine Eingabeeinheit 16 sowie eine Ausgabeeinheit 17. Durch die Eingabeeinheit 16 kann ein Anwender des Systems 1 verschiedene Daten und Informationen in die Regel- und Steuereinheit 4 eingeben. Wie nachfolgend noch im Detail beschrieben, kann es sich bei der Eingabe von Daten und Informationen um konkrete Kommandos (Befehle) zum Laden einzelner Akkumulatoren 2 handeln. Durch die Ausgabeeinheit 17 kann einem Anwender des Systems 1 beispielsweise der spezifische Status des Systems 1 oder ein konkreter Ladestatus eines Akkumulators 2 angezeigt werden. Der Anwender ist in den Figuren nicht dargestellt.

An einer Oberseite 7a des Gehäuses 7 der Regel- und Steuereinheit 4 ist beispielsweise eine erste Akku-Ladeschnittstelle 18a und zweite Akku-Ladeschnittstelle 18b positioniert. Eine Akku-Ladeschnittstelle 18a, 18b dient zum Aufnehmen und Versorgen eines Akkumulators 2 mit elektrischer Energie.

Entsprechend einer alternativen Ausführungsform können auch mehr oder weniger als zwei Akku-Ladeschnittstellen 18a, 18b vorhanden sein. Durch den Gleichspannungswandler 11 wird jeweils eine Spannung von 22V an den Akku-Ladeschnittstellen 18a, 18b bzw. eine Ladeleistung von 150 W bereitgestellt. Es ist jedoch auch möglich, dass an den Akku-Ladeschnittstellen 18a, 18b unterschiedliche Spannungswerte bereitgestellt werden.

Die Steuerungseinheit 9 dient zum Steuern und Regeln der unterschiedlichen Funktionen des gesamten Systems 1. Darüber hinaus dient die Steuerungseinheit 9 zum Steuern und Regeln der einzelnen Funktionen der Regel- und Steuereinheit 4, der ersten und zweite Versorgungseinrichtung 5 sowie der Anschlusseinrichtung 6. Zu den Funktionen gehört unter anderem die Auswahl und das Festlegung einer Ladeleistung und/oder Ladungsspannung für eine Versorgungseinrichtung 5 oder einzelner Akkumulatoren 2 in einer Versorgungseinrichtung 6.

Eine Versorgungseinrichtung 5 enthält im Wesentlichen ein Gehäuse 19, eine Energieeingabeschnittstelle 20, eine Energieausgabeschnittstelle 21, einen Gleichspannungswandler 22 sowie eine Anzahl an Akku-Schnittstellen 23.

Die Energieeingabeschnittstelle 20 dient zum Aufnehmen elektrischer Energie von der Regel- und Steuereinheit 4 in Form einer Gleichspannung unter 60 Volt. Die Aufnahme elektrischer Energie geschieht über die Leitung L. Die Leitung L kann neben der Übertragung elektrischer Energie auch für eine drahtgebundenen Kommunikation, d.h. den Austausch von Daten und Informationen in Form von elektrischen Signalen genutzt werden. Zur Kommunikationsübertragung kann wenigstens eine weitere Litze in der Leitung oder an der Leitung L vorgesehen sein. Alternativ kann eine eigenständige Kommunikationsleitung neben der stromführenden Leitung L vorgesehen sein. Alternativ kann eine drahtlose Kommunikation (z.B. Bluetooth oder WiFi) für den Daten- und Informationsaustausch vorgesehen sein.

Jede Akku-Schnittstelle 23 ist so mit der Energieeingabeschnittstelle 20 verbunden, dass mit Hilfe des Gleichspannungswandler 22 an jeder Akku-Schnittstellen 23 ein Spannungswert von 22 V bzw. eine Ladeleistung von 150 W bereitgestellt wird.

Alternativ können auch mehr als ein Gleichspannungswandler 22 vorhanden sein. Es ist dabei auch möglich, dass für jede Akku-Schnittstelle 23 ein eigener Gleichspannungswandler vorgesehen ist.

Die Energieausgabeschnittstelle 21 dient zur Abgabe elektrischer Energie von einer ersten Versorgungseinrichtung 5 an eine zweite Versorgungseinrichtung 5'. Die erste Versorgungseinrichtung 5 und zweite Versorgungseinrichtung 5' können dabei identisch ausgestaltet sein.

Gemäß eines alternativen Ausführungsbeispiels enthält jede Versorgungseinrichtung 5, 5' einen Transceiver zum drahtlosen oder drahtgebundenen Daten- und Informationsaustausch mit einer anderen Versorgungseinrichtung 5, 5' und/oder Anschlusseinrichtung 6.

Der optional vorhandene Transceiver einer Versorgungseinrichtung 5, 5' ist in den Figuren nicht gezeigt.

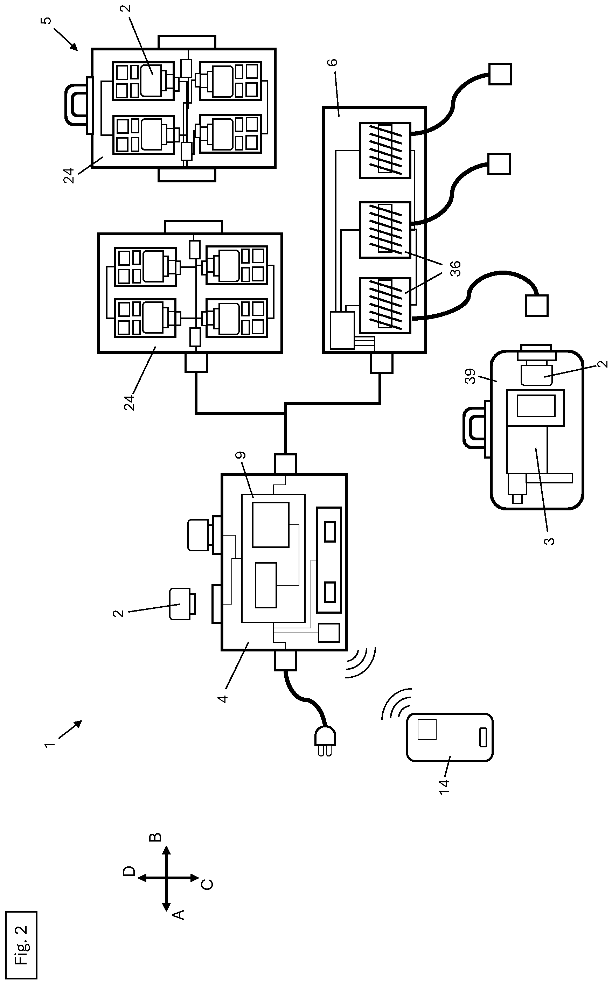

Gemäß dem in Figur 1 und 2 gezeigten Ausführungsbeispiel enthält eine Versorgungseinrichtung 5 eine Anzahl an Moduleinheiten 24. Eine Moduleinheit 24 enthält wiederum ein Modulgehäuse 25 mit einem Handgriff 26 sowie eine Anzahl an Akku-Schnittstellen 24 zum Aufnehmen von Akkumulators 2 und zum Versorgen von Akkumulators 2 mit elektrischer Energie. Gemäß der beispielhaften Ausführungsform sind jeweils vier Akku-Schnittstellen 24 in einer Moduleinheit 24 enthalten. Alternativ können auch mehr oder weniger als vier Akku-Schnittstellen 24 pro Moduleinheit 24 vorhanden sein.

Jede Moduleinheit 24 enthält eine mechanische und elektrische Schnittstelle 27, sodass einzelne Moduleinheiten 24 miteinander verbunden werden können.

Wie in Figur 2 angedeutet, kann eine erste Moduleinheit 24 in eine Pfeilrichtung B sowie in Pfeilrichtung D von einer zweiten Moduleinheit 24 entfernt werden.

Durch die elektrische Schnittstelle kann elektrische Energie von einer Moduleinheit 24 zu einer anderen Moduleinheit 24 gelangen. Des Weiteren enthält jede Moduleinheit 24 eine Kommunikationseinheit 28, durch die unterschiedliche Daten und Informationen drahtlos oder drahtgebunden zwischen den Moduleinheiten 24 ausgetauscht werden können.

Darüber hinaus dient die Kommunikationseinheit 28 auch dazu, dass Daten und Informationen drahtlos oder drahtgebunden zwischen einer oder mehreren Moduleinheiten 24 und der Regel- und Steuereinheit 4 ausgetauscht werden können.

Wie in Figur 1 und 2 angedeutet ist in der Nähe eines mit einer Akku-Schnittstelle 23 verbundenen Akkumulators 2 ein Temperatursensor 29 und eine Temperaturregeleinrichtung 30. Die Temperaturregeleinrichtung 30 enthält wiederum eine Heizung 31 und einen Lüfter 32.

Des Weiteren stehen die einzelnen Akku-Schnittstellen 23 über entsprechende Leitungen so miteinander in Verbindung, dass elektrische Energie von einer Akku-Schnittstelle 23 an eine oder mehrere Akku-Schnittstelle 23 geleitet werden kann. Ferner ist es hierdurch auch möglich, dass elektrische Energie von mehreren Akku-Schnittstellen 23 an eine einzige Akku-Schnittstelle 23 geleitet werden kann.

Die Anschlusseinrichtung 6 enthält im Wesentlichen eine Gehäuse 33, eine Energieeingabeschnittstelle 34, eine Gleichspannungswandler 35 sowie eine Anzahl an Anschlusseinheiten 36.

Die Energieeingabeschnittstelle 34 dient zum Aufnehmen elektrischer Energie von der Regel- und Steuereinheit 4 in Form einer Gleichspannung unter 60 Volt.

Jede Anschlusseinheit 36 ist so mit dem Gleichspannungswandler 35 verbunden, dass an jeder Anschlusseinheit 36 eine Gleichspannung von 22 Volt bzw. eine Ladeleistung von 150 Watt bereitgestellt wird.

Des Weiteren enthält jede Anschlusseinheit 36 eine Kabeltrommel 37 mit einer längenverstellbaren Leitung 38 auf, um elektrische Energie an eine als Koffer ausgestaltete Aufbewahrungseinheit 39 zu übermitteln. Die Leitung 38 weist an einem freien Ende 40 einen Stecker 41 aut. Der Stecker 41 kann wiederlösbar mit einer Anschlussbuchse 42 einer Aufbewahrungseinheit 39 verbunden werden. Wie in den Figuren angedeutet, ist an einer Innenwand des Koffers 39 eine Akku-Schnittstelle 43 positioniert. Die Akku-Schnittstelle 43 steht mit der Anschlussbuchse 42 in Verbindung, sodass elektrische Energie zum Laden eines Akkumulators 2, der sich in der Akku-Schnittstelle 43 befindet, gelangen kann. An der Akku-Schnittstelle 43 stehen 22 Volt bzw. 150 Watt zur Verfügung.

Entsprechend einer alternativen Ausführungsform kann auch jeweils ein Gleichspannungswandler für jeweils eine Anschlusseinheit 36 vorgesehen sein. In den Figuren ist nicht die Ausführungsform gezeigt, bei der ein Gleichspannungswandler an jeweils einer Anschlusseinheit 36 vorhanden ist.

Die als Koffer ausgestaltete Aufbewahrungseinheit 39 weist eine Größe bzw. ein Innenvolumen auf, sodass neben dem Akkumulator 2 auch eine Werkzeugmaschine 3 aufbewahrt werden kann.

Gemäß einer weiteren Ausführungsform kann eine Anschlusseinrichtung 6 so ausgestaltet sein, dass Anschlusseinheiten 36 modular (d.h. wiederlösbar) in eine Anschlusseinrichtung 6 eingebracht und wieder entfernt werden können.

### Bezugszeichen

- 1: System
- 2: Akkumulator
- 3: Werkzeugmaschine
- 4: Regel- und Steuereinheit
- 5: Versorgungseinrichtung
- 6: Anschlusseinrichtung
- 7: Gehäuse der Regel- und Steuereinheit
- 7a: Oberseite des Gehäuses der Regel- und Steuereinheit
- 8a: Eingangsschnittstelle
- 8b: Ausgabeschnittstelle
- 9: Steuerungseinheit
- 10: Gleichrichter
- 11: Gleichspannungswandler
- 12: Funkschnittstelle
- 13: Speichereinheit
- 14: externes Gerät
- 15: Eingabe- und Ausgabeeinrichtung
- 16: Eingabeeinheit
- 17: Ausgabeeinheit
- 18a: erste Akku-Ladeschnittstelle
- 18b: zweite Akku-Ladeschnittstelle
- 19: Gehäuse
- 20: Energieeingabeschnittstelle
- 21: Energieausgabeschnittstelle
- 22: Gleichspannungswandler
- 23: Akku-Schnittstellen
- 24: Moduleinheit
- 25: Modulgehäuse
- 26: Handgriff
- 27: Schnittstelle einer Moduleinheit
- 28: Kommunikationseinheit
- 29: Temperatursensor
- 30: Temperaturregeleinrichtung
- 31: Heizung
- 32: Lüfter
- 33: Gehäuse
- 34: Energieeingabeschnittstelle
- 35: Gleichspannungswandler
- 36: Anschlusseinheit
- 37: Kabeltrommel
- 38: Leitung
- 39: Aufbewahrungseinheit
- 40: freies Ende einer Leitung
- 41: Stecker
- 42: Anschlussbuchse
- 43: Akku-Schnittstelle

## Patentansprüche

1. System (1) zum Versorgen von Akkumulatoren (2), insbesondere als Energiespeicher einer Werkzeugmaschine (3), mit elektrischer Energie,
**gekennzeichnet durch** wenigstens eine Regel- und Steuereinheit (4) mit wenigstens einer Eingangsschnittstelle (8a) zur Aufnahme elektrischer Energie, mit wenigstens einer Ausgabeschnittstelle (8b) zur Abgabe elektrischer Energie, mit wenigstens einen Gleichrichter (10), wenigstens eine mit der Regel- und Steuereinheit (4) wenigstens elektrisch verbindbaren Versorgungseinrichtung (5) zum Versorgen wenigstens eines ersten und zweiten Akkumulators (2) mit elektrischer Energie sowie eine mit der Regel- und Steuereinheit (4) wenigstens elektrisch verbindbaren Anschlusseinrichtung (6) zum Versorgen wenigstens einer Aufbewahrungseinheit (39) mit elektrischer Energie, wobei jede Aufbewahrungseinheit (39) wenigstens eine Akku-Schnittstelle (42) zum Versorgen wenigstens eines Akkumulators (2) mit elektrischer Energie enthält.

2. System (1) nach Anspruch 1,
**dadurch gekennzeichnet, dass** die wenigstens eine Regel- und Steuereinheit (4) mit Hilfe des wenigstens einen Gleichrichters (10) einen AC-Eingangsspannungswert auf eine DC-Ausgangsspannung mit einem Wert von 12 bis 60 Volt, und insbesondere 48 Volt umwandelt.

3. System (1) nach wenigstens einem der vorstehenden Ansprüche,
**dadurch gekennzeichnet, dass** die Versorgungseinrichtung (5) und die Anschlusseinrichtung (6) jeweils wenigstens einen Gleichspannungswandler (22) enthält, sodass eine Ausgangsspannung mit einem Wert von 12 bis 30 Volt, und insbesondere 22 Volt, oder Ausgabeleistung mit einem Wert von 100 bis 200 Watt, und insbesondere 150 Watt, zum Laden wenigstens eines Akkumulators (2) verfügbar ist.

4. System (1) nach wenigstens einem der vorstehenden Ansprüche,
**dadurch gekennzeichnet, dass** die Versorgungseinrichtung (5) und die Anschlusseinrichtung (6) jeweils wenigstens eine Temperaturregeleinrichtung (30) zum wahlweisen Heizen oder Kühlen wenigstens eines Akkumulators (2) enthält.

5. System (1) nach wenigstens einem der vorstehenden Ansprüche,
**dadurch gekennzeichnet, dass** die Versorgungseinrichtung (5) wenigstens eine verschließbare Kammer zur Aufnahme wenigstens eines Akkumulators (2) enthält.

6. System (1) nach wenigstens einem der vorstehenden Ansprüche,
**dadurch gekennzeichnet, dass** die Anschlusseinrichtung (6) wenigstens eine in einer Länge (L) variable Leitung (38) enthält, welche zur Übertragung elektrischer Energie mit der wenigstens einen Aufbewahrungseinheit (39) wiederlösbar verbindbar ist.

7. System (1) nach wenigstens einem der vorstehenden Ansprüche,
**dadurch gekennzeichnet, dass** die wenigstens eine Aufbewahrungseinheit (39) als Koffer ausgestaltet ist.

8. System (1) nach wenigstens einem der vorstehenden Ansprüche,
**dadurch gekennzeichnet, dass** die Versorgungseinrichtung (5) wenigstens eine erste und zweite Moduleinheit (24) enthält, wobei jede Moduleinheit (24) zur Aufnahme wenigstens eines Akkumulators (2) ausgestaltet ist und wobei jede Moduleinheit (24) wenigstens eine Schnittstelle (44) zum wiederlösbaren Verbinden mit wenigstens einer weiteren Moduleinheit (24) enthält, und wobei durch die Verbindung die Moduleinheiten (24) wenigstens mechanisch, elektrisch sowie zum Datenaustausch miteinander verbunden sind.

9. System (1) nach wenigstens einem der vorstehenden Ansprüche,
**dadurch gekennzeichnet, dass** die Regel- und Steuereinheit (4) wenigstens eine Eingabe- und Ausgabeeinrichtung (15) und/oder wenigstens eine Funkschnittstelle (12) enthält.

10. System (1) nach wenigstens einem der vorstehenden Ansprüche,
**dadurch gekennzeichnet, dass** die Regel- und Steuereinheit (4) wenigstens einen Gleichspannungswandler (11) und wenigstens eine Akku-Ladeschnittstelle (18a, 18b) enthält.

11. Regel- und Steuereinheit (4) zur Verwendung in einem System nach wenigstens einem der Ansprüche 1 bis 10,
**gekennzeichnet durch** wenigstens eine Eingangsschnittstelle (8a) zur Aufnahme elektrischer Energie, wenigstens eine Ausgabeschnittstelle (8b) zur Abgabe elektrischer Energie, wenigstens einen Gleichrichter (10) sowie eine Steuerungseinheit (9).

12. Verfahren zum Steuern und Regeln eines Systems zum Versorgen von Akkumulatoren (2), insbesondere als Energiespeicher einer Werkzeugmaschine (3), mit elektrischer Energie nach wenigstens einem der Ansprüche 1 bis 10,
**gekennzeichnet durch** die Verfahrensschritte
- Bereitstellen eines ersten Leistungswerts an wenigstens einer Versorgungseinrichtung (5) zum Laden wenigstens eines ersten Akkumulators mit einem zweiten Leistungswerts und wenigstens eines zweiten Akkumulators mit einem dritten Leistungswert, wobei der zweite und dritte Leistungswert nahezu identisch sind; oder
- Bereitstellen eines ersten Leistungswerts an wenigstens einer Versorgungseinrichtung (5) zum Laden wenigstens eines ersten Akkumulators mit einem zweiten Leistungswerts und wenigstens eines zweiten Akkumulators mit einem dritten Leistungswert, wobei der zweite und dritte Leistungswert unterschiedlich sind.

13. Verfahren zum Steuern und Regeln eines Systems nach Anspruch 12,
**gekennzeichnet durch** die Verfahrensschritte
- Bereitstellen des zweiten und dritten Leistungswerts zum Laden wenigstens eines ersten Akkumulators.
